# DEMANDE DE BREVET EUROPEEN

(11) **EP 1 371 933 A1**
(43) Date de publication de la demande: **17.12.2003**
(21) Numéro de dépôt: 03291369.1
(22) Date de dépôt: 06.06.2003
(51) Int. Cl.: F42B 3/182, B60R 21/26, F42B 3/195

(54) **Dispositif de raccordement entre un connecteur et une embase d'un initiateur pyrotechnique**

(30) Priorité: 10.06.2002 FR 0207071
(71) Demandeur: SPRIA, 65009 Tarbes Cedex (FR)
(72) Inventeur: Hupe, Pascal, 65690 Barbazan Debat (FR); Rataboul, Vincent, 64350 Moncaup (FR)
(74) Mandataire: Célanie, Christian

(57) **Abrégé**

L'invention a pour objet un dispositif assurant le raccordement entre un connecteur (3) et un initiateur pyrotechnique (1). Ce dispositif est caractérisé en ce qu'il comprend un adaptateur (5) présentant d'une part un profil externe destiné à coopérer avec un profil complémentaire réalisé sur un logement (40) de l' initiateur (1) et d'autre part une cavité interne (10) destinée à recevoir un connecteur (3), l'adaptateur (5) comprenant également des premiers moyens (14) assurant sa solidarisation avec l'initiateur (1). La cavité interne (10) peut recevoir une bague shunt (6).

## Description

Le domaine technique de l'invention est celui des connecteurs électriques pour composants ou initiateurs pyrotechniques.

Les initiateurs pyrotechniques connus comportent au moins deux broches destinées à coopérer avec un connecteur permettant d'amener le courant de mise à feu à l'initiateur.

Il est connu de prévoir des initiateurs pyrotechniques comportant des moyens assurant la solidarisation du connecteur et de l'initiateur.

Le brevet FR-2807155 décrit ainsi un initiateur pyrotechnique dont le boîtier comporte une embase présentant une cavité à l'intérieur de laquelle s'étendent les broches de connexion. La cavité permet de recevoir un connecteur ou bien un composant électrique tel qu'une bague shunt.

Le connecteur est rendu solidaire de l'embase par exemple à l'aide d'un bec élastique déformable solidaire de l'embase et qui coopère avec le connecteur.

Il est également connu de prévoir sur l'initiateur pyrotechnique des pattes déformables élastiquement (généralement deux pattes) qui pincent et enserrent le connecteur et assurent ainsi son maintien.

Le brevet EP600791 décrit un tel initiateur pyrotechnique comprenant deux pattes déformables.

Un problème rencontré avec les initiateurs connus est que chaque initiateur est conçu pour recevoir un connecteur et/ou un composant shunt de dimensions données. Il n'est pas possible de raccorder un tel initiateur avec un connecteur ou un composant shunt de dimensions différentes.

Le fabricant d'initiateurs pyrotechniques est donc conduit à définir des gammes de produits différentes en fonction des standards de connectique utilisés.

Un tel problème est particulièrement présent dans le domaine de l'automobile. En effet les véhicules incorporent aujourd'hui de plus en plus d'initiateurs pyrotechniques pour déclencher les systèmes de sécurité (coussins gonflables, pré tensionneurs de ceintures...).

Or les standards de connectique diffèrent d'un constructeur automobile à l'autre. Les gammes d'initiateurs pyrotechniques doivent donc être multipliées pour satisfaire les besoins des clients ce qui accroît les coûts de production.

C'est le but de l'invention que de pallier de tels inconvénients en proposant un dispositif de raccordement entre une embase d'un initiateur et un connecteur et/ou une bague shunt.

Ainsi l'invention a pour objet un dispositif de raccordement entre un connecteur et une embase d'un initiateur pyrotechnique dispositif caractérisé en ce qu'il comprend un adaptateur présentant d'une part un profil externe destiné à coopérer avec un profil complémentaire réalisé sur un logement de l'embase de l'initiateur et d'autre part une cavité interne destinée à recevoir un connecteur et/ou une bague shunt, l'adaptateur comprenant également des premiers moyens assurant sa solidarisation avec l'embase.

Les premiers moyens de solidarisation de l'adaptateur pourront comprendre au moins une languette solidaire du profil externe de l'adaptateur et coopérant avec au moins un ergot déformable élastiquement et porté par l'embase.

Selon une autre caractéristique de l'invention, le profil externe de l'adaptateur est globalement cylindrique et l'adaptateur comprend des moyens assurant son positionnement angulaire par rapport au logement de l'embase.

Les moyens de positionnement de l'adaptateur pourront comprendre au moins une saillie périphérique destinée à coopérer avec une encoche portée par l'embase.

La cavité interne de l'adaptateur aura avantageusement un profil permettant de recevoir un composant shunt.

La cavité interne de l'adaptateur pourra avoir un profil globalement cylindrique.

L'adaptateur pourra comporter des seconds moyens assurant la solidarisation du composant shunt et de l'adaptateur.

L'adaptateur pourra comporter au moins une patte déformable élastiquement et permettant le verrouillage du connecteur.

Les seconds moyens de solidarisation portés par l'adaptateur pourront être constitués par au moins un bec solidaire de la patte et coopérant avec le composant shunt.

L'adaptateur pourra comprendre des moyens permettant d'assurer le positionnement angulaire du composant shunt.

Les moyens portés par l'adaptateur et assurant le positionnement angulaire d'un composant shunt pourront être constitués par une nervure aménagée au niveau d'une surface de fond de la cavité interne de l'adaptateur.

L'invention sera mieux comprise à la lecture de la description qui va suivre d'un mode particulier de réalisation, description faite en référence aux dessins annexés et dans lesquels :
- la figure 1 est une vue schématique d'un initiateur pyrotechnique équipé d'un connecteur et d'un composant shunt et portant un dispositif de raccordement selon l'invention,
- la figure 2 est une vue de dessus d'une embase d'un initiateur portant un dispositif de raccordement selon l'invention ainsi qu'un composant shunt,
- la figure 3 est une vue en coupe longitudinale de la figure 2, la coupe est réalisée suivant le plan dont la trace AA est repérée à la figure 2,
- la figure 4 est une vue en coupe longitudinale réalisée suivant le plan dont la trace BB est repérée à la figure 2,
- la figure 5 est une vue éclatée schématisant le montage du dispositif de raccordement et du composant shunt dans l'embase de l'initiateur,
- les figures 6a, 6b et 6c sont des vues en perspectives du dispositif de raccordement représenté seul.

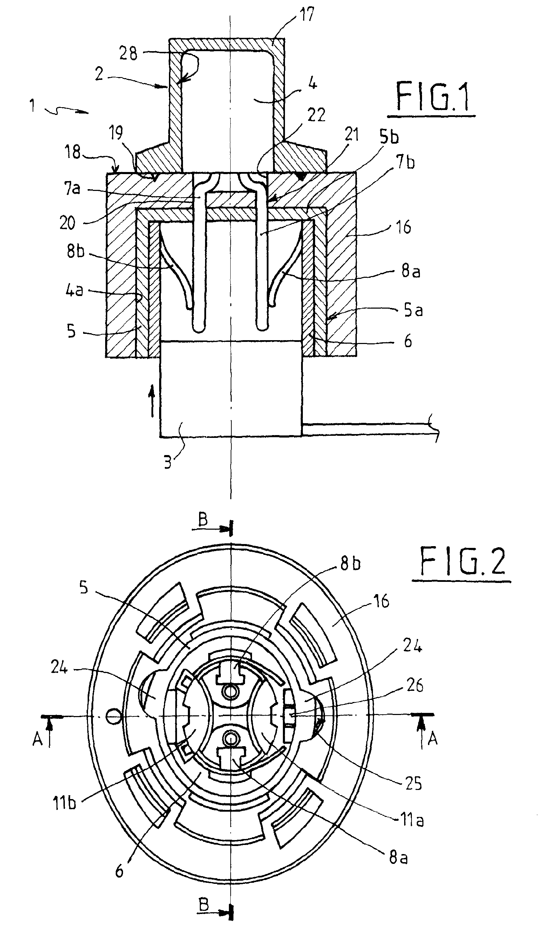

En se reportant à la figure 1, un initiateur pyrotechnique 1 comprend une composition pyrotechnique (non représentée) disposée à l'intérieur d'un boîtier 2 composé d'un étui 4 sensiblement cylindrique, réalisé par exemple en métal et prolongé par deux broches 7a,7b. Un tel boîtier n'est pas ici décrit en détails, il est connu notamment par le brevet FR2720493.

Ce boîtier 2 est disposé à l'intérieur d'une enveloppe formée par la solidarisation de deux parties : une embase 16 et une coquille supérieure 17.

La coquille et l'embase sont réalisées ici par injection d'une matière plastique, par exemple du type polyamide ou polycarbonate. Elles sont rendues solidaires l'une de l'autre par exemple par soudure aux ultrasons.

L'embase 16 comporte une face d'appui 18 sur laquelle est réalisé un sillon circulaire 19 et elle est traversée par deux trous 20, 21 reliés par une entaille 22.

Les trous 20 et 21 sont destinés à laisser passer les broches 7a et 7b du boîtier 2. L'entaille 22 permet de recevoir les courbures des broches 7a et 7b.

La coquille supérieure 17 comporte une face d'appui qui porte une denture circulaire destinée à coopérer avec le sillon 19 de l'embase 16.

La coquille supérieure 17 délimite un volume cylindrique interne 28 qui est destiné à recevoir le boîtier 2. Ce volume a donc le même diamètre que le diamètre externe du boîtier 2 et il a une hauteur égale à celle du boîtier.

L'épaisseur e de la coquille supérieure est de l'ordre de 0,5 mm. Cette coquille est suffisamment mince pour pouvoir être brisée par l'initiation de la composition pyrotechnique contenue dans le boîtier 2.

L'embase 16 comporte également un logement 40 à l'intérieur duquel s'étendent les broches 7a,7b. Ce logement à un profil cylindrique et il est destiné à recevoir une bague shunt au standard de diamètre 11 mm (selon la norme française CF BNA/F-0306 C N51).

Un tel initiateur est décrit par le brevet FR-2807155. Il ne sera donc pas décrit plus en détails.

Il sera possible à titre de variante de réaliser l'embase 16 et la coquille supérieure 17 en un autre matériau, par exemple en métal. La fixation de la coquille 17 sur l'embase pourra alors être réalisée par tout moyen approprié (sertissage, collage, soudure...) .

Conformément à l'invention, un dispositif de raccordement est prévu qui permet de raccorder un connecteur 3 avec l'embase 16 de l'initiateur 1. Pour la clarté de la figure 1, le connecteur 3 est représenté déconnecté.

Ce dispositif de raccordement est constitué par un adaptateur 5 qui comprend ici une paroi cylindrique 5a, ajustée au logement 40 (diamètre 11 mm) de l'embase 16, et un fond 5b.

Cet adaptateur 5 reçoit un composant shunt 6 de type connu au standard diamètre 10mm (voir notamment le contenu du brevet FR2807155). Un tel composant comporte deux lamelles conductrices 8a et 8b reliées électriquement l'une à l'autre et qui permettent de court-circuiter les broches 7a et 7b lorsque le connecteur 3 n'est pas en place.

L'épaisseur de la paroi cylindrique de l'adaptateur 5 sera choisie de façon à permettre la mise en place du composant shunt 6 et du connecteur 3.

La figure 1 est schématique et ne représente pas tous les détails structurels de l'adaptateur 5 et du composant shunt 6. Ces détails sont représentés plus précisément sur les figures 2 à 6.

On voit ainsi qu'il est possible de définir un initiateur pouvant recevoir des connecteurs 3 et/ou des bagues shunt 6 de tailles différentes.

Il suffit de prévoir une embase 16 pour cet initiateur ayant un logement 40 de dimensions telles qu'il puisse recevoir directement un premier type de connecteur (avec éventuellement un composant shunt) ou bien un deuxième type de connecteur de taille plus réduite avec interposition d'un adaptateur et/ou d'un composant shunt.

Un tel initiateur peut alors être compatible des différents standards de connectique présents sur le marché : on pourra à titre d'exemple définir l'embase pour que son logement 40 puisse recevoir un composant shunt au standard 11mm (diamètre externe du composant shunt).

Une telle embase pourra alors également recevoir un composant shunt au standard 10mm avec l'interposition d'un adaptateur 5 ayant 1mm d'épaisseur.

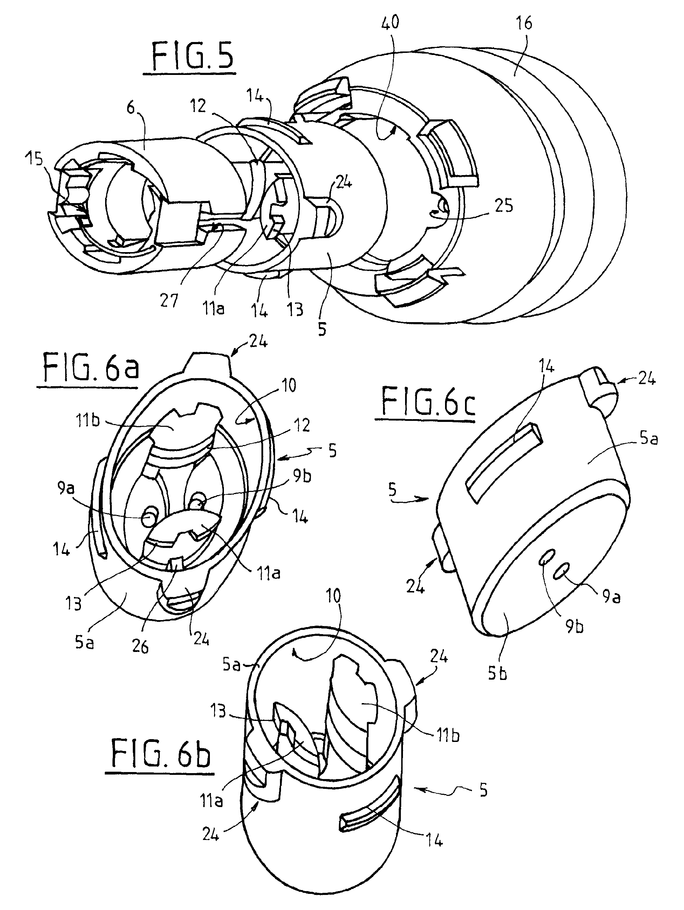

Les figures 6a, 6b et 6c montrent l'adaptateur 5 seul.

Cet adaptateur comprend une paroi cylindrique 5a et un fond 5b. Le fond 5b est percé de deux trous 9a, 9b destinés à recevoir les broches 7a et 7b de l'initiateur. La cavité interne 10 de l'adaptateur 5 est cylindrique et elle est conformée pour recevoir un composant shunt 6.

Le fond 5b de l'adaptateur porte deux pattes 11a, 11b qui sont déformables élastiquement. Chaque patte porte un bourrelet 12, aménagé au niveau d'une face interne de la patte, et qui est disposé en regard de l'autre patte. Les deux pattes permettent d'assurer le verrouillage du connecteur, le bourrelet 12 opposant une résistance à l'extraction du connecteur.

Chaque patte 11a, 11b porte au niveau de son extrémité supérieure un bec 13 qui est orienté radialement dans une direction opposée à celle où se trouve l'autre patte.

Ce bec 13 est destiné à coopérer avec le composant shunt 6 pour assurer la solidarisation de celui ci avec l'adaptateur 5.

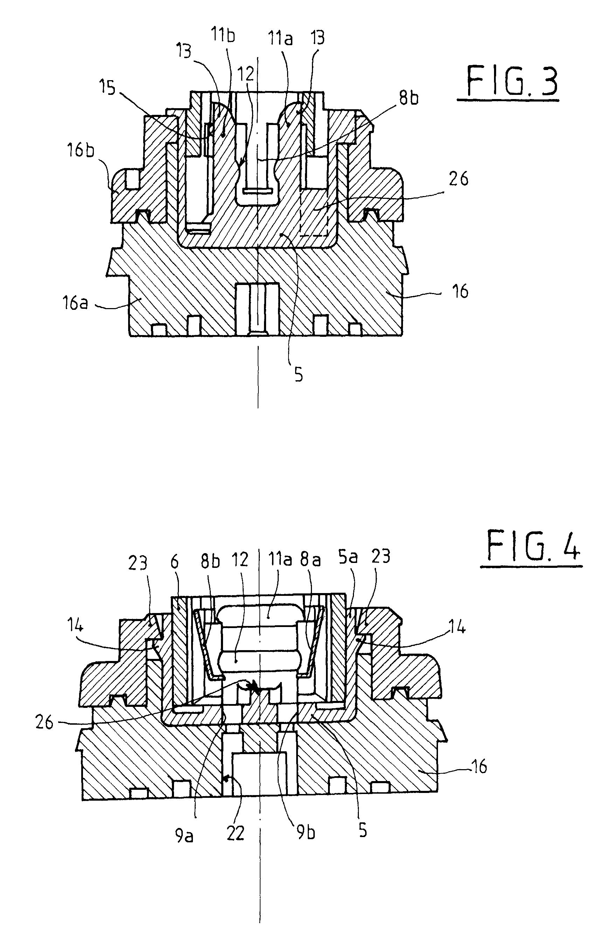

La figure 3 montre ainsi la coopération des becs 13 avec une encoche 15 portée par le composant shunt 6. L'encoche 15 est plus particulièrement visible sur la figure 5.

La paroi cylindrique 5a de l'adaptateur 5 comporte sur sa surface externe deux languettes 14 qui sont destinées à coopérer chacune avec un ergot déformable élastiquement et porté par l'initiateur.

La figure 4 montre la coopération des languettes 14 avec les ergots 23.

La paroi cylindrique 5a de l'adaptateur 5 comporte également deux saillies périphériques 24. Chaque saillie 24 est destinée à coopérer avec une encoche 25 de forme complémentaire aménagée sur l'embase 16 de l'initiateur (voir également les figures 2 et 5).

Les saillies 24 constituent des moyens permettant d'assurer le positionnement angulaire du support 5 par rapport au logement 40 de l'embase 16 de l'initiateur.

Comme cela est plus particulièrement visible à la figure 2, les saillies 24 ne sont pas placées symétriquement l'une de l'autre par rapport à l'axe du support 5. Ce léger décalage angulaire permet d'assurer qu'il n'existe qu'une seule façon d'introduire le support 5 dans le logement 40.

L'adaptateur 5 comprend également des moyens permettant d'assurer le positionnement angulaire du composant shunt 6.

Ces moyens comprennent une nervure 26 longitudinale qui est aménagée au niveau de la surface de fond de la cavité interne 10 de l'adaptateur (voir figures 2, 3, 4 et 6a). Cette nervure coopère avec une fente 27 portée par le composant shunt 6 (voir figure 5).

Les figures 2, 3 et 4 montrent de façon plus précise la structure des différents éléments du dispositif selon l'invention.

On notera que dans le mode de réalisation présenté sur ces figures, on n'a pas représenté la coquille supérieure 17 de l'initiateur mais seule l'embase 16. Par ailleurs l'embase 16 est formée ici de deux parties : une partie supérieure 16a et une partie inférieure 16b qui sont soudées l'une à l'autre par ultra sons (voir figures 3 et 4).

Le montage du dispositif de raccordement selon l'invention est extrêmement simple.

On place tout d'abord l'adaptateur 5 dans la cavité interne 40 de l'embase 16 (voir figure 5).

Les saillies 24 permettent d'assurer une orientation angulaire correcte de l'adaptateur par rapport à l'embase 16.

Les premiers moyens de solidarisation constitués par les languettes 14 de l'adaptateur assurent le verrouillage de ce dernier sur l'embase 16.

On introduit ensuite le composant shunt 6 dans l'adaptateur 5. Le bon positionnement angulaire du shunt est assuré par la nervure 26 qui coopère avec la fente 27.

Les seconds moyens de solidarisation portés par l'adaptateur et qui sont constitués par les becs 13 portés par les pattes 11a, 11b assurent le verrouillage relatif de l'adaptateur avec le composant shunt.

Il sera possible alors d'introduire un connecteur 3 dans le composant shunt 6. Les pattes 11a, 11b assureront le verrouillage du connecteur avec l'initiateur.

Différentes variantes sont possibles sans sortir du cadre de l'invention.

Il est possible ainsi de réaliser des adaptateurs ayant des formes ou profils différents pour pouvoir s'adapter à des connecteurs de formes différentes.

Les pattes de verrouillage 11a, 11b pourront être solidaires de l'embase de l'initiateur et non de l'adaptateur. On réalisera alors un adaptateur 5 annulaire dépourvu de fond 5a.

On pourra modifier les formes des moyens assurant verrouillage ou positionnement de l'adaptateur.

On pourra également définir un adaptateur qui incorpore les moyens assurant la fonction du composant shunt (lamelles 8a, 8b).

On pourra définir un adaptateur permettant la mise en place d'un connecteur donné sans interposition d'un composant shunt.

Dans tous les cas le dispositif selon l'invention permet de raccorder l'embase d'un initiateur ayant une géométrie donnée à au moins deux connecteurs de géométries différentes.

On pourra enfin définir pour un initiateur donné plusieurs modèles d'adaptateurs permettant de raccorder l'initiateur à plus de deux connecteurs différents.

## Revendications

1. Dispositif de raccordement entre un connecteur (3) et une embase (16) d'un initiateur pyrotechnique ***caractérisé en ce qu*'**il comprend un adaptateur (5) présentant d'une part un profil externe (5a) destiné à coopérer avec un profil complémentaire réalisé sur un logement (40) de l'embase (16) de l'initiateur et d'autre part une cavité interne (10) destinée à recevoir un connecteur (3) et/ou une bague shunt (6), l'adaptateur comprenant également des premiers moyens assurant sa solidarisation avec l'embase (16).

2. Dispositif de raccordement selon la revendication 1, **caractérisé en ce que** les premiers moyens de solidarisation de l'adaptateur comprennent au moins une languette (14) solidaire du profil externe de l'adaptateur et coopérant avec au moins un ergot (23) déformable élastiquement et porté par l'embase (16).

3. Dispositif de raccordement selon une des revendications 1 ou 2, **caractérisé en ce que** le profil externe (5a) de l'adaptateur (5) est globalement cylindrique et **en ce que** l'adaptateur comprend des moyens (24) assurant son positionnement angulaire par rapport au logement de l'embase (16).

4. Dispositif de raccordement selon la revendication 3, **caractérisé en ce que** les moyens de positionnement de l'adaptateur comprennent au moins une saillie périphérique (24) destinée à coopérer avec une encoche (25) portée par l'embase (16).

5. Dispositif de raccordement selon une des revendications 1 à 4, **caractérisé en ce que** la cavité interne (10) de l'adaptateur a un profil permettant de recevoir un composant shunt (6).

6. Dispositif de raccordement selon la revendication 5, **caractérisé en ce que** la cavité interne (10) de l'adaptateur a un profil globalement cylindrique.

7. Dispositif de raccordement selon une des revendications 5 ou 6, **caractérisé en ce que** l'adaptateur comporte des seconds moyens (13) assurant la solidarisation du composant shunt (6) et de l'adaptateur (5).

8. Dispositif de raccordement selon une des revendications 1 à 7, **caractérisé en ce que** l'adaptateur (5) comporte au moins une patte (11a, 11b) déformable élastiquement et permettant le verrouillage du connecteur.

9. Dispositif de raccordement selon les revendications 7 et 8, **caractérisé en ce que** les seconds moyens de solidarisation portés par l'adaptateur sont constitués par au moins un bec (13) solidaire de la patte (11a, 11b) et coopérant avec le composant shunt (6).

10. Dispositif de raccordement selon une des revendications 5 à 9, **caractérisé en ce que** l'adaptateur (5) comprend des moyens permettant d'assurer le positionnement angulaire du composant shunt (6).

11. Dispositif de raccordement selon la revendication 10, **caractérisé en ce que** les moyens portés par l'adaptateur (5) et assurant le positionnement angulaire d'un composant shunt (6) sont constitués par une nervure (26) aménagée au niveau d'une surface de fond de la cavité interne (10) de l'adaptateur (5).
